# EUROPÄISCHE PATENTSCHRIFT

(11) **EP 1 064 512 B1**
(45) Veröffentlichungstag und Bekanntmachung des Hinweises auf die Patenterteilung: **12.11.2003**
(21) Anmeldenummer: 99942822.0
(22) Anmeldetag: 09.08.1999
(51) Int. Cl.: F28F 13/00, F02M 31/16

(54) **VORRICHTUNG ZUR ERWÄRMUNG FLIESSFÄHIGER STOFFE**
DEVICE FOR HEATING FLOWABLE MATERIALS
DISPOSITIF PERMETTANT DE CHAUFFER DES MATERIAUX FLUIDES

(30) Priorität: 07.08.1998 DE 19835864
(43) Veröffentlichungstag der Anmeldung: 03.01.2001
(73) Patentinhaber: Späth, Max Michael, Dr., 82166 Gräfelfing (DE)
(72) Erfinder: Späth, Max Michael, Dr., 82166 Gräfelfing (DE)
(74) Vertreter: Szynka, Dirk
(86) Internationale Anmeldenummer: EP9905760
(87) Internationale Veröffentlichungsnummer: WO00008403

(56) Entgegenhaltungen:
- EP-A- 0 340 619
- EP-A- 0 830 893
- WO-A-86/02978
- DE-A- 2 627 555
- DE-A- 3 015 150
- DE-A- 3 903 558
- DE-U- 9 012 911
- US-A- 3 195 627
- US-A- 4 798 191
- US-A- 5 044 346
- US-A- 5 231 968
- PATENT ABSTRACTS OF JAPAN vol. 6, no. 153 (M-149), 13. August 1982 (1982-08-13) & JP 57 070946 A (HONDA), 1. Mai 1982 (1982-05-01)

## Beschreibung

Die Erfindung bezieht sich auf eine Vorrichtung zum Erwärmen fließfähiger Stoffe, insbesondere Dieseltreibstoff.

In Behältern und Rohrleitungssystemen werden Stoffe üblicherweise in flüssigem oder gasförmigem Zustand transportiert. Fällt die Temperatur unter einen bestimmten Wert, beginnt der Stoff im Behälter oder der in einer Rohrleitung zu transportierende Stoff in unerwünschter Weise, in einen dichteren Aggregatzustand überzugehen. Bei gasförmigen Stoffen führt dies zur Ausbildung von Tröpfchen und zu einem Kondensatniederschlag an den Innenwänden. Flüssige Stoffe neigen zum "Versulzen", so daß die Flüssigkeit nicht mehr aus dem Behälter entnommen bzw. im Rohr transportiert werden kann. Bekanntes Beispiel hierfür ist das Versulzen von Dieselkraftstoff bei niedrigen Temperaturen.

Zwar könnte diesen unerwünschten Erscheinungen durch Vermindern des Drucks im Behälter bzw. der Rohrleitung entgegengewirkt werden. Dies ist jedoch in der Regel nicht möglich. Teilweise versucht man durch chemische Zusätze (z. B. beim sogenannten Winterdiesel) den gewünschten Aggregatzustand zu erhalten.

Bekannt sind Vorrichtungen wie die in US 4,798,191 beschriebene, die Treibstoff vor dessen Eintritt in den Verbrennungsraum erwärmen. Dies geschieht Aktivierung des Treibstoffs, so dass dieser vollständiger verbrannt wird.

Bekannt sind ferner unterschiedliche Formen der Wärmezufuhr, um so die Temperatur des Stoffes auf einem Wert zu halten, der ausreicht, die unerwünschte Erscheinung zu unterdrücken. Entsprechende Heizvorrichtungen sind aus der DE 32 43 809 A1 und der DE 35 16 253 A1 bekannt. Die Zufuhr einer großen Wärmemenge innerhalb kurzer Zeit kann aber zu unerwünschten Nebenwirkungen führen. So kann der betreffende Stoff in seiner Substanz geschädigt werden. Auch ist es möglich, daß infolge lokaler Temperaturspitzen der Stoff nicht aus dem dickflüssigen in den normal flüssigen Zustand, sondern gleich in unerwünschter Weise in den gasförmigen Aggregatzustand übergeht.

Bei leicht entflammbaren Stoffen besteht darüber hinaus bei zu schneller Wärmezufuhr, insbesondere bei lokalen Temperaturspitzen, eine Explosionsgefahr.

Selbstverständlich besteht auch die Möglichkeit, die Wärme nur langsam zuzuführen. Dies hat jedoch den Nachteil, daß der gewünschte flüssige oder gasförmige Aggregatzustand erst nach einem längeren Zeitraum erreicht wird. Wenn aber bei einer laufenden Anlage der Temperaturgrenzwert unterschritten wird, dann muss zur Vermeidung von Unterbrechungen rasch wieder die erforderliche Temperatur erreicht werden, da sonst der Betrieb der Anlage gestört würde.

Der Erfindung liegt daher die Aufgabe zugrunde, eine Vorrichtung zur Erwärmung fließfähiger Stoffe zu schaffen, bei der es möglich ist, dem in einem Behälter, z. B. Tank, einem Rohrleitungssystem oder dgl. befindlichen flüssigen oder gasförmigen Stoff innerhalb kurzer Zeit eine größere Wärmemenge zuzuführen, ohne daß es zu den geschilderten Nachteilen kommt.

Die erstgenannte Aufgabe wird erfindungsgemäß durch die im Patentanspruch 1 beschriebene Vorrichtung gelöst. Wenn unmittelbar vor dem Behälterauslass im Wärmeübertragungselement ein Hohlraum ausgebildet wird, steht eine größere Menge des im Behälter gelagerten Stoffes unmittelbar zur Verfügung, was vorteilhaft ist, wenn plötzlich eine große Menge des Stoffes entnommen werden soll. So wird bei Dieselmotoren nach einer Vorwärmzeit des Wärmeübertragungselements in dessen Hohlraum eine ausreichende Kraftstoffmenge zur Verfügung stehen, die das dem Tank nachgeordnete Leitungssystem bis hin zur Einspritzdüse so weit erwärmen kann, daß der Kraftstoff diese noch oberhalb der Versulzungstemperatur erreicht.

Bevorzugte Weiterbildungen und Ausgestaltungen der erfindungsgemäßen Vorrichtung sind Gegenstand der Patentansprüche 2 bis 13.

Erfindungsgemäß wird zumindest in einen Teil eines Behälters, z. B. eines Kraftstofftanks, oder einer Rohrleitung ein Wärmeübertragungselement eingebracht. Geeignete Materialien sind z. B. Kupfer oder Aluminium.

Besteht gemäss Anspruch 2 das Wärmeübertragungselement aus einem Paket von Stahlwolle, möglichst langen Metallspänen oder -fäden bzw. einem gewickelten oder gefalteten Streckmetallgitter (siehe z. B. EP 0 340 619 A) oder Drahtgestrick so hat das Wärmeübertragungselement eine sehr große Oberfläche bei geringem Eigenvolumen, und der Strömungswiderstand ist gering. So beansprucht ein bekanntes Streckmetallgitter nur etwa 2% des Volumens eines Behälters. Wenn das Wärmeübertragungselement vorzugsweise im Bereich des Abflusses eines Tanks angeordnet ist dann treten keine Durchflussprobleme auf. Dies ergibt sich daraus, daß üblicherweise die Abflussöffnung eines Tanks, bezogen auf den Durchmesser, sehr klein ist. Füllt das Wärmeübertragungselement den gesamten Tank aus, so ergibt sich zusätzlich der Vorteil, daß infolge der unzähligen kleinen Kammern jede Schwallbewegung einer Flüssigkeit reduziert wird. Ferner verhindern diese Kammern Explosionen, da sich keine Flammenwand ausbreiten kann. Lokale Überhitzungen sind ungefährlich. Sollte beispielsweise bei gasförmigen Stoffen das Wärmeübertragungselement unter Beibehaltung des Durchmessers die Strömung behindern, so kann in erfindungsgemäßer Weise im Bereich des Wärmeübertragungselements der Durchmesser des Rohres im erforderlichen Umfang vergrößert werden.

Durch eine Verdichtung des Wärmeleitelements im Randbereich wird dessen Lagestabilität verbessert.

Die Wärme kann dem Wärmeübertragungselement auf unterschiedlichste Weise zugeführt werden (Ansprüche 4 bis 11).

Als Heizelement kann ein elektrisch betriebener Heizstab vorgesehen werden, der im Behälter oder Rohr mit dem Wärmeübertragungselement in thermischem Kontakt steht.

Als Heizelement kann ferner ein mit dem Wärmeübertragungselement in thermischem Kontakt stehender, die Behälteroder Rohrwandung durchdringender und mit einer Wärmequelle verbundener Wärmeleitkörper vorgesehen sein. Dabei ist der Wärmeleitkörper vorzugsweise als die Behälter- oder Rohrwandung durchdringender Ring oder Stab ausgebildet, der aus einem Wärmespeicher oder mittels eines von einem Heizmedium durchströmten Kanal aufgewärmt wird.

Beispielsweise kann der Wärmeleitkörper mit einem Wärmerückgewinnungssystem verbunden sein, beispielsweise einem Wärmespeicher. Dieser bezieht bei Verbrennungsmotoren seine Wärmeenergie während der Dauer des Betriebs des Motors von dessen Kühlsystem und/oder von dessen Abgaswärme. In der Stillstandszeit des Motors fließt kein Kraftstoff durch das Wärmeleitelement. Zum Anfahren läßt sich das Wärmeübertragungselement, z. B. über einen Wärmeleitkörper, mit Hilfe der Standheizung eines Kraftfahrzeugs aufwärmen.

Besonders vorteilhaft ist der Einsatz von sogenannten Q-Pipes, die einen Thermosyphon oder einen geschlossenen Schwerkraft-Wärmepumpenkreislauf darstellen. Q-Pipes sind hohle, in sich geschlossene Rohrsysteme, in denen ein Unterdruck herrscht. Sie sind zu einem geringen Teil mit einer leicht verdampfenden Flüssigkeit gefüllt. Diese sammelt sich infolge der Schwerkraft im unteren Teil eines Q-Pipes. Durch Wärmezufuhr im unteren Bereich des Q-Pipes verdampft die Flüssigkeit und steigt als Dampf nach oben. Wenn der obere Bereich des Q-Pipes kühler wird, kondensiert der Dampf, gibt Wärme ab und tropft wieder nach unten. Zur leichteren Kondensatbildung gibt es eine Vielzahl konstruktiver Vorschläge über die Ausbildung von Tropfnasen im Inneren von Q-Pipes. Q-Pipes haben eine über 50-fach höhere Wärmeleitfähigkeit als Massivkupfer. In ihnen wird die Wärme "mechanisch" vom unteren zum oberen Ende des Q-Pipe transportiert. Wenn im oberen Bereich des Q-Pipe keine Wärmeabfuhr und somit kein Kondensiervorgang erfolgt, dann wird auch aus dem unteren Bereich des Q-Pipe keine Wärme entnommen. Sind ein oder mehrere Q-Pipes in einem Wärmespeicher unterhalb des Wärmeübertragungselements so angeordnet, daß sie in das Wärmeübertragungselement hineinragen, ist ein Wärmetransport vom Wärmespeicher bzw. Heizmedium in das Wärmeübertragungselement möglich. Wenn hierbei das Wärmeübertragungselement die Verdampfungstemperatur der im Q-Pipe befindlichen Flüssigkeit hat, dann erfolgt praktisch auch kein mechanischer Wärmetransport mehr. Erfindungsgemäß bewirkt dies, daß, wenn kein Stoff durch das Wärmeübertragungselement strömt, auch keine Abkühlung erfolgt, so daß keine Wärme an das Wärmeübertragungselement abgegeben wird.

Besteht der Behälter oder das Rohr aus einem gut wärmeleitenden Material, so kann zur Beheizung des Wärmeübertragungselements eine Heizmanschette vorgesehen werden, die vorzugsweise mit dem die Behälter- oder Rohrwandung durchdringenden Ring oder Stab in Wärmekontakt steht.

Eine weitere bevorzugte Möglichkeit der Beheizung des Wärmeübertragungselements besteht darin, den Behälter oder das Rohr im Bereich des Übertragungselements mit einer Induktionsspule zu umschließen.

Eine weitere bevorzugte Möglichkeit ist ein Mikrowellengenerator, dessen Feld auf das Wärmeübertragungselement gerichtet ist.

Der Einsatz der beschriebenen Wärmeleitelemente hat einenweiteren Vorteil. Wenn sich infolge zu starker Wärmezufuhr durch das Heizaggregat Dampfblasen bilden, dann steigen diese üblicherweise ungestört durch die Flüssigkeit und gelangen so in die gasförmige Atmosphäre oberhalb der Flüssigkeit. Durch die unzähligen kleinen Kanäle des Wärmeübertragungselements wird verhindert, daß große Dampfblasen aufsteigen. Bereits beim Entstehen einer großen Dampfblase wird diese in eine Vielzahl von kleinen Dampfblasen aufgespalten. Viele kleine Dampfblasen haben insgesamt eine wesentlich größere Oberfläche als eine einzige große Dampfblase. Infolge dieser größeren Oberfläche wird die im Dampf enthaltene Wärmeenergie schneller an die Umgebung, das heißt an das Wärmeübertragungselement und die Flüssigkeit abgegeben. Infolge der labyrinthartigen, unzähligen Kanäle in einem Wärmeübertragungselement müssen aufsteigende Dampfblasen einen wesentlich längeren Weg bis zur Flüssigkeitsoberfläche zurücklegen, als wenn sie ungehindert zur Flüssigkeitsoberfläche aufsteigen könnten. Dieser längere Weg bedeutet einen zeitlich längeren Oberflächenkontakt zum Wärmeübertragungselement und zur Flüssigkeit. Da jede Dampfblase nur für die Dauer des Oberflächenkontaktes Wärme an das Wärmeübertragungselement und die Flüssigkeit abgeben kann, führt eine längere Zeit des Oberflächenkontaktes auch zu einer größeren Wärmeabgabe. Insgesamt wird somit durch das Wärmeübertragungselement in vorteilhafter Weise die dem Dampf innewohnende Wärmeenergie besser an die Flüssigkeit abgegeben.

Die Erfindung wird anhand der in der Zeichnung dargestellten Ausführungsbeispiele erläutert. Es zeigen:
- Fig. 1: den schematischen Längsschnitt eines Behälters mit einem Wärmeübertragungselement
- Fig. 2 bis 9: schematische Längsschnitte verschiedener Ausführungsformen des Wärmeübetragungselements und der Heizeinrichtung und
- Fig. 10: schematisch eine Vorrichtung zur Durchführung eines Verfahrens zur Herstellung eines kombinierten Heiz- und Wärmeübertragungselements.

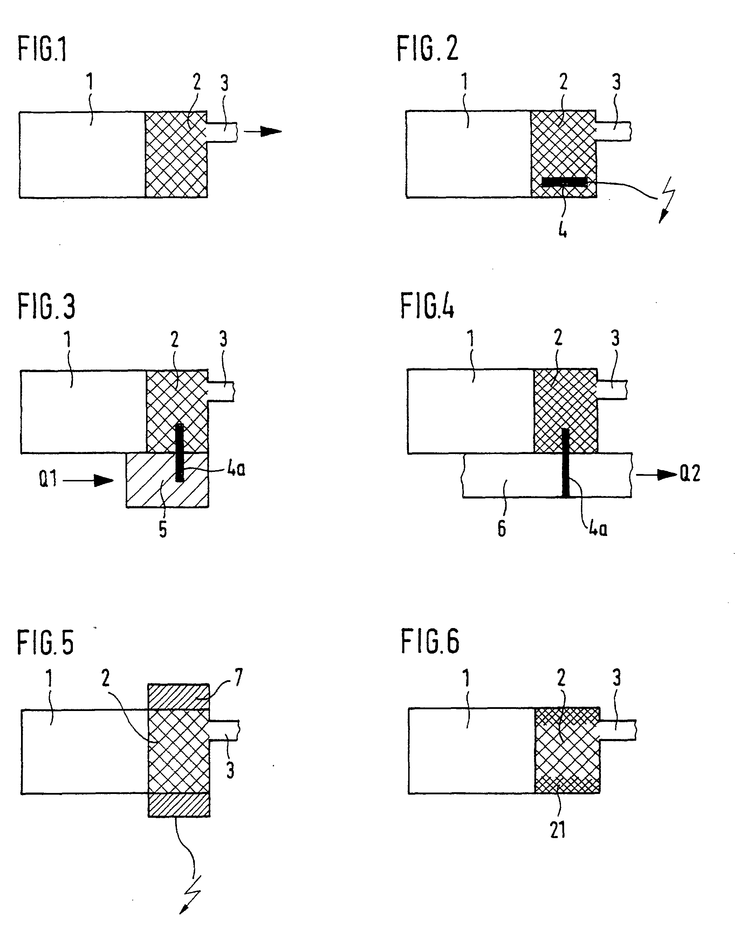

Gemäß Fig. 1 ist in einem Behälter, beispielsweise einem Kraftstofftank 1, ein Wärmeübertragungselement 3 angeordnet. Es besteht beispielsweise aus einem Streckmetallpaket, das den ganzen Querschnitt des Tanks 1 ausfüllt und unmittelbar vor dessen Auslaß 3 angeordnet ist. Befindet sich im Tank 1 beispielsweise versulzter Dipeselkraftstoff, so kann dem Wärmeübertragungselement 2 Wärmeenergie zugeführt werden. Hierdurch verflüssigt sich der Kraftstoff zumindest im Bereich des Wärmeübertragungselements 2, so daß ein normaler Kraftstoffabfluß möglich ist.

Bei dem Ausführungsbeispiel der Fig. 2 befindet sich innerhalb des Tanks 1 und des Wärmeübertragungselements 2 ein elektrischer Heizstab 4, der mit dem Wärmeübertragungselement 2 in Wärmekontakt steht.

Fig. 3 zeigt eine Vorrichtung mit einem stab- oder ringförmigen Wärmeleitkörper 4a. Der Stab oder Ring durchdringt die Wandung des Tanks 1 und steht einerseits mit dem Wärmeübertragungselement 2 und andererseits mit einem Wärmespeicher 5, der z. B. vom Motorblock beheizt wird, oder einem von einem aufgeheizten Medium durchströmten Kanal 6 (Fig. 4) in Wärmekontakt. Der Kanal 6 wird von einer warmen Flüssigkeit oder einem warmen Gas, z. B. dem Abgas eines Motors durchströmt.

Bei den Ausführungsbeispielen der Fig. 3 und 4 kann der Wärmeleitkörper 4a als Q-Pipe ausgebildet sein.

Fig. 5 zeigt eine erfindungsgemäße Vorrichtung, bei der der Tank 1 im Bereich des Wärmeübertragungselements 2 von einer Heizmanschette 7 umschlossen ist. Die Heizmanschette kann elektrisch beheizt sein. Es besteht jedoch auch die Möglichkeit, daß die Heizmanschette 7 ähnlich wie der Kanal 6 in Fig. 4 aufgebaut ist, also von einer erwärmten Flüssigkeit oder einem erwärmten Gas durchströmt wird. In diesem Fall ist es vorteilhaft, wenn die Heizmanschette wendelartig um den Tank 1 gelegt ist (nicht dargestellt). Vorzugsweise umschließt die Heizmanschette den Wärmeleitkörper 4a, wenn ein solcher vorhanden ist.

Fig. 6 zeigt eine erfindungsgemäße Vorrichtung, bei der das Material des Wärmeübertragungselements 2 in einem Randbereich 21 verdichtet ist. Durch diese Materialverdichtung ist eine bessere Wärmeübertragung zwischen dem Heizelement und dem Wärmeübertragungselement 2 möglich. Auch gibt diese Ausbildung dem Wärmeübertragungselement 2 eine höhere Lagestabilität.

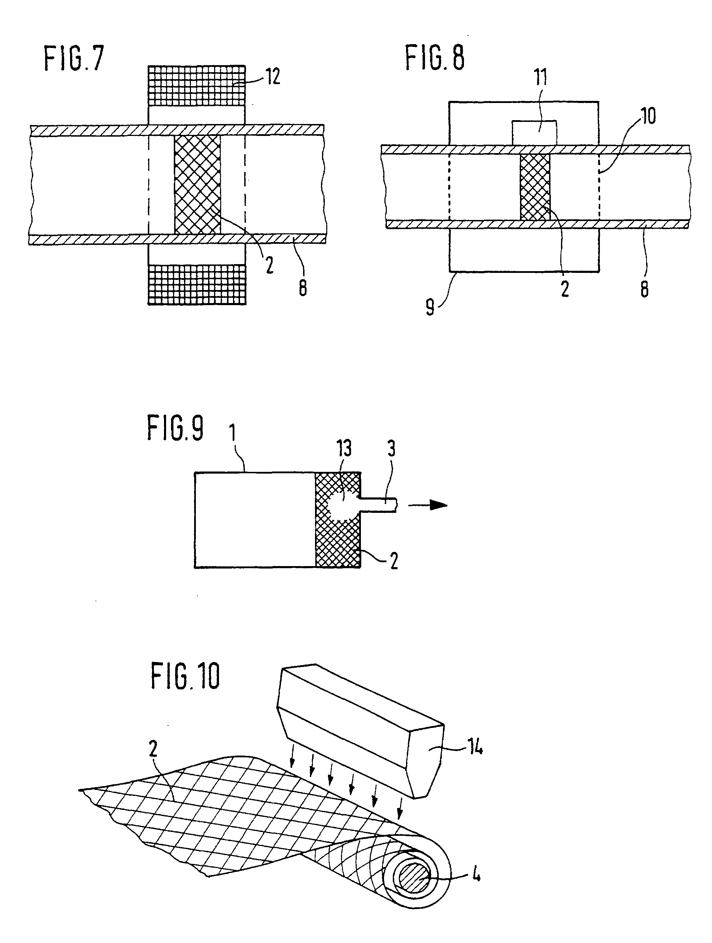

Fig. 7 zeigt eine erfindungsgemäße Vorrichtung mit einem von dem zu erwärmenden Medium durchströmten Rohr 8, das aus einem nicht leitenden Material besteht. Innerhalb des Rohrs befindet sich ein Wärmeübertragungselement 2, z. B. aus Streckmetall. Das Rohr 8 ist im Bereich des Wärmeübertragungselements 2 von einer Induktionsspule 12 umschlossen. Wird von der Induktionsspule 12 ein vorzugsweise hochfrequentes Wechselfeld erzeugt, erwärmt sich das Wärmeübertragungselement 2, das die Wärme an das durch das Rohr 8 strömende Medium abgibt.

Fig. 8 zeigt eine gänzlich andere Form der Wärmezufuhr. Ein Teil des ebenfalls nicht leitenden Rohres 8 ist wie ein Mikrowellenherd aufgebaut. Eine Mikrowelleneinheit 9 umschließt das Rohr 8; sie besitzt im Inneren des Rohres 8 ein feinmaschiges leitendes Gitter 10, das zusammen mit dem Mikrowellengenerator 9 einen faradayschen Käfig bildet. Ein Mikrowellensender 11 wirkt hierbei auf das Wärmeübertragungselement 2 ein. Gegenüber dem Mikrowellensender 11 wirkt das Wärmeübertragungselement 2 wie eine Antenne und erwärmt sich. Diese Wärme dient dann zur Aufheizung des im Rohr 8 strömenden Mediums.

Fig. 9 zeigt eine Ausführungsform der erfindungsgemäßen Vorrichtung, bei der im Wärmeübertragungselement 2, vorzugsweise in der Nähe des Tankauslasses 3 ein Hohlraum 13 ausgebildet ist. Wenn das Wärmeübertragungselement 2 nach einer der vorstehend beschriebenen Möglichkeiten erwärmt wird, so steigt die erwärmte Flüssigkeit auf und sammelt sich im Hohlraum 13. Wird dem Tank 1 über den Tankauslaß 3 Kraftstoff entnommen, dann ist im Hohlraum 13 für die Startphase ein Kraftstoffvorrat vorhanden.

Vorzugsweise werden die verschiedenen Heizeinrichtungen so miteinander kombiniert, daß sowohl beim Anfahren als auch im Dauerbetrieb unter den jeweils günstigsten Bedingungen genügend Kraftstoff zur Verfügung steht.

Fig. 10 zeigt eine Vorrichtung zur Herstellung einer Kombination aus einem Wärmeübertragungselement 2 und einem Heizstab 4. Ein Band aus Streckmetall, beispielweise gemäß EP 0 340 619, wird am Heizstab 4 befestigt und anschließend auf diesem aufgerollt. In Fig. 10 sind die Wicklungen mit einem gewissen Abstand zueinander dargestellt. Tatsächlich liegt jedoch Wicklung an Wicklung fest an. Da die einzelnen Stege des Streckmetalls praktisch senkrecht zur Oberfläche des Streckmetalls stehen, besteht insbesondere über die ersten Windungen hinweg nur an wenigen Punkten Wärmekontakt. Um hier den Wärmekontakt zu verbessern, kann das auf den Heinzstab 4 aufzuwickelnde Metallband über die ersten Zentimeter aus einem durchgehenden, ungelochten Metallband bestehen, auf das dann das eigentliche Streckmetallband folgt. Alternativ kann über die ersten Windungen hinweg eine Metallfolie zwischen die Windungen eingelegt werden, so daß der Wärmekontakt gerade zwischen den ersten Windungen verbessert wird.

Nach der in Fig. 10 gezeigten Ausführungsform wird über eine Zufuhreinheit 14 wird während des Wickelvorganges zumindest über die ersten Windungen laufend flüssiges, aushärtbares, wärmeleitendes Material aufgetragen, z. B. ein leitfähiger Kunststoff. Dieses fließt durch die Poren des Streckmetalls hindurch, so daß nach seiner Verfestigung das Wärmeübertragungselement 2 in einem den Heizstab 4 umschließenden Bereich mit diesem Vergußmaterial ausgefüllt ist. Hierdurch wird zwischen Heizelement 4 und Wärmeübertragungselement 2 eine optimale Wärmeübertragung erreicht, da der Wärmefluß vom Heizstab 4 auf jeden einzelnen Steg des Wärmeübertragungselements 2 gewährleistet ist. Wichtig ist nur, den Wärmekontakt über die ersten Windungen des entstehenden Wickels zu verbessern. Bei den späteren Windungen sind derartige zusätzliche Maßnahmen nicht mehr erforderlich, weil wegen des größer werdenden Durchmessers an immer mehr Punkten Wärmekontakt besteht.

### Bezugszeichenliste

- 01: Behälter/Tank
- 02: Wärmeübertragungselement
- 03: Tankauslaß
- 04: Heizstab
- 04a: Wärmeleitkörper (Stab oder Ring)
- 05: Wärmespeicher
- 06: Kanal
- 07: Heizmanschette
- 08: Rohr
- 09: Mikrowellengenerator
- 10: Gitter
- 11: Mikrowellensender
- 12: Induktionsspule
- 13: Hohlraum
- 14: Zufuhrvorrichtung
- 21: verdichteter Bereich

## Patentansprüche

1. Vorrichtung zur Erwärmung fließfähiger Stoffe, mit einem zur Aufnahme bzw. Leitung des zu erwärmenden Stoffes vorgesehenen Behälter (1) oder Rohr, und einem im Behälter (1), vorzugsweise in der Nähe seines Auslasses (3), bzw. im Rohr angeordneten, heizbaren Wärmeübertragungselement (2), **dadurch gekennzeichnet, daß** im Wärmeübertragungselement (2) unmittelbar vor dem Behälterauslass (3) ein Hohlraum (13) angeordnet ist.

2. Vorrichtung nach Anspruch 1, **dadurch gekennzeichnet, daß** das Wärmeübertragungselement (2) aus den Behälter (1) wenigstens teilweise bzw. den gesamten Rohrquerschnitt ausfüllender Stahlwolle, Metallspänen, Streckmetall oder einem Drahtgestrick besteht.

3. Vorrichtung nach Anspruch 2, **dadurch gekennzeichnet, daß** das Wärmeübertragungselement (2) in einem Randbereich (21) verdichtet ist.

4. Vorrichtung nach einem der Ansprüche 1 bis 3, **dadurch gekennzeichnet, daß** als Heizelement im Wärmeübertragungselement (2) ein mit diesem in thermischem Kontakt stehender, elektrisch betriebener Heizstab (4) vorgesehen ist.

5. Vorrichtung nach einem der Ansprüche 1 bis 3, **dadurch gekennzeichnet, daß** als Heizelement ein mit dem Wärmeübertragungselement (2) in thermischem Kontakt stehender, die Behälter- oder Rohrwandung durchdringender und mit einer Wärmequelle verbundener Wärmeleitkörper vorgesehen ist.

6. Vorrichtung nach Anspruch 5, **dadurch gekennzeichnet, daß** der Wärmeleitkörper aus einem die Behälter- oder Rohrwandung durchdringenden Ring oder Stab (4a) besteht.

7. Vorrichtung nach Anspruch 5, **dadurch gekennzeichnet, daß** die Wärmequelle als Wärmespeicher (5) oder als von einem Heizmedium durchströmter Kanal (6) ausgebildet ist.

8. Vorrichtung nach Anspruch 6, **dadurch gekennzeichnet, daß** der Stab als Q-Pipe ausgebildet ist.

9. Vorrichtung nach einem der Ansprüche 1 bis 6, **dadurch gekennzeichnet, daß** der Behälter oder das Rohr im Bereich des Wärmeübertragungselements (2) von einer Heizmanschette (7) umschlossen ist.

10. Vorrichtung nach einem der Ansprüche 1 bis 6, **dadurch gekennzeichnet, daß** der Behälter (1) oder das Rohr im Bereich der Wärmeübertragungselements (2) von einer Induktionsspule (12) umschlossen ist.

11. Vorrichtung nach einem der Ansprüche 1 bis 3, **gekennzeichnet durch** einen auf das Wärmeübertragungselement (2) wirkenden Mikrowellengenerator (11).

12. Vorrichtung nach einem der Ansprüche 2 bis 3 und Anspruch 4, **dadurch gekennzeichnet, daß** ein Ende eines Bandes aus Streckmetallgitter (2) an einem stabförmigen Heizelement (4) befestigt und auf dem Heizelement (4) aufgewickelt ist.

13. Vorrichtung nach Anspruch 12, **dadurch gekennzeichnet, daß** ein, vorzugsweise über die ersten Windungen, über die Breite des Streckmetallgitterbandes (2) während des Aufwickelns aufgetragenes, aushärtbares, flüssiges Material es in das Gitter des Streckmetallbandes eingeflossen und dort ausgehärtet ist.

## Claims

1. An apparatus for heating flowable substances including a container (1) or tubular receptacle provided for receiving or communicating said flowable substance to be heated, and a heatable heat transfer element (2) arranged in said container (1), preferably in the vicinity of its outlet (3) or in said tubular receptacle, **characterized in that** in said heat transfer element (2) a cavity (13) is arranged directly upstream of said container outlet (3).

2. The apparatus as set forth in claim 1, **characterized in that** said heat transfer element (2) consists of steel wool, swarf, expanded metal or wire mesh filling said container (1) at least in part, or the complete cross-section of said tubular receptacle.

3. The apparatus as set forth in claim 2, **characterized in that** said heat transfer element (2) is compressed in an edge portion (21).

4. The apparatus as set forth in any of the claims 1 to 3, **characterized in that** provided as said heating element in said heat transfer element (2) is an electrically operated heater rod (4) in thermal contact with said heat transfer element (2).

5. The apparatus as set forth in any of the claims 1 to 3, **characterized in that** provided as said heating element is a thermally conducting member in thermal contact with said heat transfer element (2), penetrating said container or tubular receptacle wall and connected to a heat source.

6. The apparatus as set forth in claim 5, **characterized in that** said thermally conducting member comprises a ring or rod (4a) penetrating said container or tubular receptacle wall.

7. The apparatus as set forth in claim 5, **characterized in that** said heat source is configured as a heat storage (5) or as a flow passage (6) for communicating a heating medium.

8. The apparatus as set forth in claim 6, **characterized in that** said rod is configured as a Q-pipe.

9. The apparatus as set forth in any of the claims 1 to 6, **characterized in that** said container (1) or said tubular receptacle is surrounded by a heating cuff (7) in the region of said heat transfer element (2).

10. The apparatus as set forth in any of the claims 1 to 6, **characterized in that** said container (1) or said tubular receptacle is surrounded by an induction coil (12) in the region of said heat transfer element (2).

11. The apparatus as set forth in any of the claims 1 to 3, **characterized by** a microwave generator (11) acting on said heat transfer element (2).

12. The apparatus as set forth in any of the claims 2 to 3 and claim 4, **characterized in that** one end of a strip of expanded metal mesh (2) is secured to a rod-type heating element (4) and wrapped around said heating element (4).

13. The apparatus as set forth in claim 12, **characterized in that** a hardening-formulated liquid material applied during wrapping over the width of the strip of expanded metal mesh (2), preferably over the first windings, has penetrated into the mesh of said band of expanded metal where it has hardened.

## Revendications

1. Dispositif permettant de chauffer des matériaux fluides, comprenant un récipient (1) ou un tube prévu pour recevoir ou pour acheminer le matériau à chauffer, et un élément chauffable de transmission de la chaleur (2) disposé de préférence à proximité de sa sortie (3) ou dans le tube, **caractérisé en ce qu'**un espace creux (13) est disposé dans l'élément de transmission de la chaleur (2) immédiatement avant la sortie du récipient (3).

2. Dispositif selon la revendication 1, **caractérisé en ce que** l'élément de transmission de la chaleur (2) se compose de laine d'acier, de copeaux métalliques, de métal déployé ou d'un treillis métallique remplissant le récipient (1) au moins partiellement ou toute la section du tube.

3. Dispositif selon la revendication 2, **caractérisé en ce que** l'élément de transmission de la chaleur (2) est densifié dans une zone de bordure (21).

4. Dispositif selon l'une des revendications 1 à 3, **caractérisé en ce que** comme élément chauffable dans l'élément de transmission de la chaleur (2) est prévu une cartouche chauffante (4) électrique qui se trouve en contact thermique avec celui-ci.

5. Dispositif selon l'une des revendications 1 à 3, **caractérisé en ce que** comme élément chauffable est prévu un corps conducteur de chaleur relié avec une source de chaleur qui se trouve en contact thermique avec l'élément de transmission de la chaleur (2) et qui traverse la paroi de récipient ou du tube.

6. Dispositif selon la revendication 5, **caractérisé en ce que** le corps conducteur de chaleur se compose d'un anneau ou d'une barre (4a) qui traverse la paroi du récipient ou du tube.

7. Dispositif selon la revendication 5, **caractérisé en ce que** la source de chaleur est réalisée sous la forme d'un accumulateur de chaleur (5) ou d'un conduit (6) traversé par un fluide chaud.

8. Dispositif selon la revendication 6, **caractérisé en ce que** la barre est réalisée sous la forme d'un « Q-pipe ».

9. Dispositif selon l'une des revendications 1 à 6, **caractérisé en ce que** le récipient ou le tube sont entourés d'un manchon chauffant (7) dans la zone de l'élément de transmission de la chaleur (2).

10. Dispositif selon l'une des revendications 1 à 6, **caractérisé en ce que** le récipient (1) ou le tube sont entourés d'une bobine d'induction (12) dans la zone de l'élément de transmission de la chaleur (2).

11. Dispositif selon l'une des revendications 1 à 3, **caractérisé par** un générateur de micro-ondes (11) qui agit sur l'élément de transmission de la chaleur (2).

12. Dispositif selon l'une des revendications 2 à 3 et 4, **caractérisé en ce que** l'extrémité d'une bande de treillis en métal déployé (2) est fixée sur un élément chauffant (4) en forme de barre et enroulée sur l'élément chauffant (4).

13. Dispositif selon la revendication 12, **caractérisé en ce qu'**un matériau liquide durcissable appliqué pendant l'enroulement sur la largeur de la bande de treillis en métal déployé (2) de préférence sur les enroulements externes est injecté dans le treillis de la bande en métal déployé puis y est durci.
